# EUROPEAN PATENT APPLICATION

(11) **EP 4 386 783 A1**
(43) Date of publication of application: **19.06.2024**
(21) Application number: 22306920.4
(22) Date of filing: 16.12.2022
(51) Int. Cl.: H01B 7/282, H01B 9/00, C08K 3/40

(54) **COMPOSITE WATER BARRIER**

(71) Applicant: Nexans, 92400 Courbevoie (FR)
(72) Inventor: AKULICHEV, Anton, 1769 Halden (NO); MAURI, Massimiliano, 1739 Borgenhaugen (NO); JOHANSON, Audun, 0661 Oslo (NO)
(74) Representative: Ipsilon

(57) **Abstract**

A water barrier (130) for a power cable, comprising a composite layer comprising a first component, wherein the first component is a polymer; and at least a second component, wherein the second component is impermeable to water molecules wherein the second component is selected from fibres having an aspect ratio of 10 or higher and an average length of 1 mm or less, plate-like particles having an aspect ratio of 10 or higher, fibres having an average length of more than 1 mm, fabrics or any combination thereof, and wherein the second component is dispersed into the first component, a power cable (100).

## Description

### Field of the invention

The present invention relates to a composite water barrier, especially a water barrier for a subsea power cable.

### Background

The current carrying parts of power cables may need to be kept dry. Intrusion of humidity or water may cause electrical breakdown of the power cable insulation system. Breakdown risk increases with gradually accumulating concentration of water in the insulation. At some humidity level in the insulation, the probability of electrical breakdown rises to nearly 100 %. Therefore, HV subsea power cables operating > Um 72.5 kV are required to be dry, and they are normally sheathed with a lead water barrier at > 36 kV as recommended by IEC 60840.

The core section of power cables is therefore usually protected by a water barrier arranged radially around the cable core. The cable core refers here to the combination of an electric conductor, and an insulation system surrounding the electric conductor in a cable. Up to date, the dominating material in water barriers for power cables is lead since lead has proven to be a reliable and sturdy sheathing material.

Several solutions for insulation systems providing water barriers to submarine power cables are known, but all have various disadvantages that should be overcome. One drawback is that lead is a high-density materiel adding significant weight to the cable. The heavy weight induces extra costs in the entire value chain from production, under transport, storage, deployment, and when the cable is discarded after reaching its lifetime. Another drawback is that lead has a relatively low fatigue resistance making leaden water barriers less suited for dynamical power cables. Furthermore, lead is a rather poisonous material increasingly meeting environmental regulation restrictions. An environmentally friendly replacement of lead as water barrier in power cables is required. Finally, longitudinally welded sheaths are difficult to weld in a continuous way guaranteeing that no holes are present in the weld. A single hole present would result in water rushing through the gap rendering the barrier ineffective.

A known alternative to lead screens is the use of high resistance metallic screens or metal polymer laminates. These screen types have a high per-unit-length resistance, which is excellent for cables in operation as induced currents are small and hence also the losses occurring in them. However, these alternative water barriers still have an unacceptable risk of failure for example because it is difficult to identify defects in production (pinholes in the metal, bad adhesion between the layers, insufficient melting of the polymeric layers to seal the construction etc.)

The present invention attempts to solve some of these drawbacks, or at least to improve on existing solutions.

### SUMMARY OF THE INVENTION

The present invention is defined by the appended claims and in the following.

In a first aspect, the present invention relates to a water barrier for a power cable, comprising a composite layer comprising
- a first component, wherein the first component is a polymer; and
- at least a second component,
wherein the second component is impermeable to water molecules
wherein the second component is selected from
- fibres having an aspect ratio of 10 or higher and an average length of 1 mm or less,
- plate-like particles having an aspect ratio of 10 or higher,
- fibres having an average length of more than 1 mm,
- fabrics
- or any combination thereof; and
wherein the second component is dispersed into the first component.

In other word the first component is a polymer matrix in which the second component is dispersed. In an embodiment, the second component is evenly dispersed in the first component.

In an embodiment the composite layer is formed by an extrusion process.

The "aspect ratio" of an object is defined as the being the longest dimension of the object defining a first axis divided by the longest dimension of the object along a second axis perpendicular to the first axis. In other words, the aspect ratio is the length of the object divided by the width of the object.

The term "fabric" refers to any woven or non-woven material comprising fibres.

The "length" of a fibre is defined as the being the longest dimension of the fibre and is measured using known techniques to the person skilled in the art, depending on their size. The length of the fibre may be determined for example by optical microscopy, SEM, TEM, zeta sizer, ISO 22314:2006.

The "average" length refers to the mean length of the fibres.

In an embodiment, the first component is a thermoplastic polymer.

In an embodiment, the thermoplastic polymer is chosen from:
- Polyethylene and copolymers thereof
- Polypropylene and copolymers thereof
- Polyamide and copolymers thereof
- Polyvinyl chloride
- Thermoplastic polyurethane
- Thermoplastic vulcanizates
- Cast polyurethane.

In an embodiment, the second component is selected from fibres having an aspect ratio of 10 or higher and an average length of 1 mm or less, plate-like particles having an aspect ratio of 10 or higher, and the volume fraction of the second component is in the range of 1 to 50%, 2 to 40%, 5 to 30%, or 10 to 20%. The volume fraction may be for example measure using ASTM D3171-22.

Here, the higher the percentage of the second component, the better the water barrier properties of the composite layer are, but the more difficult the extrusion process of the composite layer is.

In an embodiment, the second component is selected from:
- nanoclay particles, such as bentonite, kaolinite, hectorite, halloysite;
- graphene and graphene oxide platelets;
- graphene nanotubes;
- multi-wall carbon nanotubes;
- glass fibre having a volume average length of0.1 to 1000 µm;
- carbon fibre having a volume average length of0.1 to 1000 µm;
- basalt fibre having a volume average length of 0.1 to 1000 µm;
- alumina, titania, zirconia, silica particles and their modifications.

In an embodiment, the second component is chosen from fibres having an average length of more than 1 mm and/or fabrics and the volume fraction of the second component is comprised between 1 and 90 %.

In an embodiment the second component is selected from:
- glass fibre;
- carbon fibre;
- basalt fibre; and
- metal fibre.

In an embodiment, the water barrier further comprises an additional layer, and the additional layer comprises a metallic layer. The additional layer may be arranged on top of the composite layer, between the insulation layer and the composite layer, or between two composite layers.

In an embodiment, the additional layer is a longitudinal welded sheet.

In an embodiment, the additional layer is a metal-polymer composite comprising:
- the metallic layer made of a metal foil having an inner and an outer surface area, the inner surface area is oriented towards the cable core; and
- a first layer of a thermoplastic semiconducting polymer laid onto the inner surface area of the metal foil, and/or a second layer of a thermoplastic semiconducting polymer laid onto the outer surface area of the metal foil.

In an embodiment, the water barrier further comprises an adhesive layer laid onto the inner and/or on the outer surface area of the metal foil.

In an embodiment, the adhesive layer covers from 5 to 95 % of the inner and/or of the outer surface area of the metal foil.

In an embodiment, the additional layer is lead free.

The term "lead free" as applied here refers to metallic screen comprising less than 5%, less than 4%, less than 3%, less than 2%, less than 1%, less than 0.5%, less than 0.4%, less than 0.3%, less than 0.2%, less than 0.1%, less than 0.05%, or preferably comprising 0% lead.

In an embodiment, the metal foil is either an Al/Al-alloy such as for example an AA1xxx series, an AA5xxx series or an AA6xxx series alloy according to the Aluminium Association Standard, or a Cu/Cu-alloy such as for example pure Cu, a CuNi-alloy or a CuNiSi-alloy age hardened to T6, or a Fe/Fe-alloy, such for example stainless alloy SS316 or S32750.

In a second aspect, the invention relates to a power cable comprising an electric conductor, an insulation system surrounding the electric conductor, and a water barrier according to the first aspect of the invention, surrounding the insulation system.

In an embodiment, the insulation system comprises an inner semiconducting layer, an insulating layer and an outer semiconducting layer.

The water barrier according to the first aspect may be applied on a power cable during production thereof. The water barrier may also be applied as a water barrier over factory joints as well as on site joints during installation, inspections or repairs.

### SHORT DESCRIPTION OF THE DRAWINGS

In the following description this invention will be further explained by way of exemplary embodiments shown in the drawings:
Fig. 1 is a cross section of a first embodiment of the cable.
Fig. 2 is a cross section of a second embodiment of the cable.

### DETAILED DESCRIPTION OF THE INVENTION

The current carrying parts of power cables may need to be kept dry. Intrusion of humidity or water may cause electrical breakdown of the power cable insulation system. The core section of power cables is therefore usually protected by a water barrier 130 arranged radially around the cable core. Up to date, the dominating material in water barriers for power cables is lead since lead has proven to be a reliable and sturdy sheathing material.

Thin, high-resistance metallic screens and laminate solutions are coming up as candidate alternatives to replace lead, but also have significant drawbacks.

The present technical solution is based on providing a water barrier 130 comprising a composite layer 131, the composite layer 131 comprising a first component, such as a polymer, with a given water permeation rate, and at least a second component, either impermeable for water molecules or hydrophilic. The composite layer 131 can, for example, be formed by making a composite of a polymer and fibres having an average length of more than 1 mm, or a polymer and fibres having an aspect ratio of 10 or higher and an average length of 1 mm or less, plate-like particles having an aspect ratio of 10 or higher or a combination of them.

The distribution of the second component in the composite layer 131 is homogeneous. The distribution is almost never periodic in reality, therefore each water molecule does not have a straight path through the layer of a tightly packed multi-phase material. This effectively reduces water diffusion rates. When increasing the volume fraction of the at least a second component, the second component forms a percolated network in the composite microstructure, resulting in a surprisingly drastic fall of the water permeation rate.

It is also important to understand that the permeation through the aforementioned water barrier 130 / composite layer 131 is not only related to the volume fraction, morphology and orientation of the at least a second, non-pervious, component, but also the interface properties between the phases. As such, the exact material chemistry(s) and physics are relevant (T. Matseevuch, 2019, Modeling of water permeability through the polymer nanocomposites). The at least a second component can be further enhanced with regards to barrier permeability by selecting components with- / or manufacturing pathways that activate functional properties to directly or in-directly react with humidity to prevent such humidity to pass for example as described in: JP6193245B2, EP2082619A4, where such solutions are deployed to react to defects in an (second layer) primary barrier layer and mitigate such defects. i.e. particularly suitable for a multi-layer system. Furthermore, the functional properties improvement might be indirect in nature so as a compromised second layer is rendered less critical. This can be by action of countering local corrosion or delamination or pre-existing defect. A combination of different constituents might be necessary to achieve that.

The following composite water barrier 130 / composite layer 131 solutions or their combinations can be used:
1. A composite of a first and at least a second component. The second component comprising fibres having an aspect ratio of 10 or higher and an average length of 1 mm or less, and/or plate-like particles having an aspect ratio of 10 or higher, the second component is dispersed in the first component a thermoplastic polymer.
2. A composite of a first and at least a second component. The second component comprising fibres having an average length of more than 1 mm and/or fabrics, the second component is dispersed in the first component a thermoplastic polymer.

In the first option, the following materials (alone or in combination) may be used:
- As a second component: Fibres having an aspect ratio of 10 or higher and an average length of 1 mm or less, and/or plate-like particles having an aspect ratio of 10 or higher (with and without coupling agent, preferably in a volume fraction from 1 to 40 % of the composite):
   ∘ Nanoclay particles, such as bentonite, kaolinite, hectorite, halloysite
   ∘ Graphene and graphene oxide platelets
   ∘ Graphene nanotubes
   ∘ Multi-wall carbon nanotubes
   ∘ Glass fibre having a volume average length of 0.1 to 1000 µm
   ∘ Carbon fibre having a volume average length of 0.1 to 1000 µm
   ∘ Basalt fibre having a volume average length of 0.1 to 1000 µm
   ∘ Alumina, titania, zirconia, silica particles and its modifications (incl. nanoparticles)
- As a first component: Thermoplastic polymer:
   ∘ Polyethylene (incl. LLDPE, MDPE, HDPE) and copolymers thereof
   ∘ Polypropylene and copolymers thereof
   ∘ Polyamide (Nylon) and copolymers thereof
   ∘ Polyvinyl chloride (PVC)
   ∘ Thermoplastic polyurethane (TPU)
   ∘ Thermoplastic vulcanizates (TPV, e.g. Santoprene)
   ∘ Cast polyurethane (PU)

In the second option, the following materials (alone or in combination) can be used:
- As a second component: fibres having an average length of more than 1 mm and/or fabrics (with and without coupling agent, unidirectional or multi-directional fabrics):
   ∘ Glass fibre
   ∘ Carbon fibre
   ∘ Basalt fibre
   ∘ Metal fibre (Any metal or metal alloy)
- As a first component: Thermoplastic polymer:
   ∘ Polyethylene (incl. LLDPE, MDPE, HDPE) and copolymers thereof
   ∘ Polypropylene and copolymers thereof
   ∘ Polyamide (Nylon) and copolymers thereof
   ∘ Polyvinyl chloride (PVC)
   ∘ Thermoplastic polyurethane (TPU)
   ∘ Thermoplastic vulcanizates (TPV, e.g. Santoprene)
   ∘ Cast polyurethane (PU)

The fibres having an average length of more than 1 mm can be pre-impregnated with a thermoplastic polymer from the list before application in the cable, polymer-impregnated fibre tapes (composite tape) and fabrics can also be used. The fibres having an average length of more than 1 mm can be applied by winding in a single layer with one direction or several layers (plies) with multiple directions forming a composite laminate with a multi-layer structure. The fibre direction spans from 0 to 90 degrees with respect to the cable axis. The fibres volume fraction may be within 10 to 80 %. A composite layer with multiple constituents can be formed by combining composite fibre placement and extrusion processes. In some special cases, electrically conductive particles, such as carbon black or carbon nanotubes, can be added to the thermoplastic with fibres having an average length of more than 1 mm of nonconductive origin in order to increase the conductivity of the whole water-barrier layer.

The abovementioned second component might be pre-impregnated prior to extrusion with a polymer, using known techniques such as running the second component through a bath comprising the polymer.

A combination of fibres having an average length of more than 1 mm reinforcement and constituents mentioned above might lead to simplified cable designs where the functions of the water barrier and armouring layer are taken by a single layer.

The abovementioned composites might be further enhanced by subjecting them to post-extrusion treatment including thermal, vibration, mechanical compaction or drawing, and/or in combination with an electric or magnetic field in order to improve the anisotropy of said particles in the sheath as it is known that certain orientations are more favourable concerning the water barrier properties.

In some embodiment, the composite water barrier 130 may further comprise an additional layer 132 in order to further slowdown water diffusion, and to prevent migration of chemicals in the insulation 120 that could harm the cables electrical properties.

This additional layer is located between the insulation layer 120 and the composite layer 131.

In an embodiment, the composite water barrier 130 further comprises an additional layer 132 that is a metallic layer (i.e. a metal or metal-oxide layer) being wrapped radially around the cable core, with at least some overlap between opposite ends edges of the metallic layer. In an embodiment, the metal or metal-oxide layer may alternatively be deposited by chemical, electro-chemical or an direct energy technique- including but not limited to electrodeposition, physical vapor deposition, chemical vapor deposition or similar.

In an embodiment, the composite water barrier 130 further comprises an additional layer 132 that is a laminate structure which is wrapped radially around the cable core, with at least some overlap between opposite ends edges of the laminate structure.

In an embodiment, the composite water barrier 130 further comprises an additional layer 132, positioned between the composite layer 130 and a second composite layer. This can be achieved by winding a metallic or "laminate" tape after applying a first layer of any composite water barrier 130 solutions mentioned above. The metallic tape winding is then followed by a second layer of any composite water barrier 130 solutions mentioned above. Such structure has an inherent advantage of a much better mechanical stability of the metallic layer against buckling and fatigue as it is supported by the more rigid and stable composite layers. The manufacturing steps can be combined with the heat treatment or other processing means described above. A modified winding station for applying composite and metallic tapes simultaneously can also be used.

In the embodiment where the additional layer is a metal-polymer composite ("laminate"), the laminated structure is characterised in that the laminate structure comprises:
- a metal foil having an inner and an outer surface area. The inner surface area is oriented towards the cable core.
- a first layer of a thermoplastic semiconducting polymer laid onto the inner surface area of the metal foil, and/or a second layer of a thermoplastic semiconducting polymer laid onto the outer surface area of the metal foil.
- optionally a first adhesive layer laid onto the inner surface area of the metal foil. The first adhesive layer laid may cover from 5 to 95 % of the inner surface area of the metal foil.
- optionally a second adhesive layer laid onto the outer surface area of the metal foil. The second adhesive layer laid may cover from 5 to 95 % of the outer surface area of the metal foil.

In addition, the laminate structure may be thermally set by a heat treatment.

The term "metal foil" as used herein, refers to the metal layer in the middle of the laminate structure. The invention is not tied to use of any specific metal/metal alloy or thickness of the metal foil. Any metal/metal alloy at any thickness known to be suited for use in water barriers in power cables by the skilled person may be applied. In one example embodiment, the metal foil is made of either an Al/Al-alloy such as for example an AA1xxx series, an AA5xxx series or an AA6xxx series alloy according to the Aluminium Association Standard, or a Cu/Cu-alloy such as for example pure Cu, a CuNi-alloy or a CuNiSi-alloy, or a Fe/Fe-alloy, such for example stainless alloy SS316 or S32750. The thickness of the metal foil may in an example embodiment be in one of the following ranges; from 10 to 250 µm, preferably from 15 to 200 µm, more preferably from 20 to 150 µm, more preferably from 25 to 100 µm, and most preferably from 30 to 75 µm.

The term "adhesive layer laid onto and covering from 5 to 95 % of the surface area of the metal foil" as used herein refers to an adhesive applied to enhance the adherence between the metal foil and another layer. In general, adhesives have relatively poor electrical conductivities such that a layer of adhesive completely covering the interface between the metal foil and the semiconducting polymer may hamper the electric conductivity in the radial direction. Thus, in an advantageous embodiment, the adhesive is to be applied with less than complete coverage of the surface of the metal foil to enable direct contact between the metal foil and the next layer, such as a semiconducting polymer. In this embodiment, at least 5 % of the surface area of the metal foil (and correspondingly the semiconducting polymer) should be free of adhesive and at least 5 % of the surface should be covered with adhesive to ensure sufficient adhesion between the metal foil and the semiconducting polymer, i.e. the adhesive should cover the surface area of the metal foil in the range of from 5 to 95 %, preferably from 10 to 90 %, more preferably from 15 to 85 %, more preferably from 25 to 75 %, and most preferably from 50 to 75 %.

The incomplete covering of the adhesive layer may be obtained by applying the adhesive in a raster pattern or in any other manner known to the skilled person.

The invention may apply any adhesive known to the skilled person being suited for attaching a polymer layer to a metal surface. Examples of suited adhesives includes, but is not limited, to; epoxy resins, phenolic resins, polyurethane based adhesives, cyanoacrylates, acrylic adhesives, polyester based adhesives, copolymer of ethylene and ethyl acrylate, copolymer of ethylene and ethyl acrylic acid, methacrylic acid, copolymer of ethylene and glycidyl methacrylate or epoxy-based monomer such as 1,2-epoxy-1-butene, and copolymer of ethylene and maleic-anhydride. The above-mentioned adhesives may be applied with or without electrically conductive particulates providing the adhesive an enhanced electric conductivity.

The term "thermoplastic polymer" as used herein means that the polymer material becomes pliable or mouldable at certain elevated temperatures and thereafter solidifies upon cooling. The property of being thermoplastic, combined with the incomplete coverage of the adhesive, provides the advantage that an improved electric contact between the metal foil and the semiconducting polymer may be achieved by a heat treatment causing the polymer to melt and then solidify in intimate contact with non-adhering parts of the surface of the metal foil. This effectively reduces the electrical resistance across the metal foil/semiconducting polymer interface in these non-adhering area(s). The thickness of the thermoplastic semiconducting polymer (before thermosetting) may in an example embodiment be in one of the following ranges; from 25 to 300 µm, preferably from 35 to 200 µm, more preferably from 40 to 150 µm, more preferably from 50 to 100 µm, and most preferably from 50 to 75 µm.

The invention may in the laminate structure??? apply any thermoplastic semiconductive polymer known to the skilled person being suited for use in power cables. Examples of suited polymers includes, but is not limited, to; a polyethylene-based material constituted of either low density polyethylene (LDPE), a linear low density polyethylene (LLDPE), a medium density polyethylene (MDPE), or a high density polyethylene (HDPE), or a copolymer of ethylene with one or more polar monomers of; acrylic acid, methacrylic acid, glycidyl methacrylate, maleic acid, or maleic anhydride. The polymer is made semiconducting by addition and homogenisation of from 20 to 40 weight% particulate carbon in the polymer mass. Examples of suited particulate carbon includes but is not limited to; comminuted petrol coke, comminuted anthracite, comminuted char coal, carbon black, carbon nanotubes, etc.

The term "the laminate structure is thermally set by a heat treatment" as used herein means that after wrapping the laminate structure around the cable core, the laminate structure is heat treated to a temperature at which the thermoplastic semiconducting polymer melts and then cooled to the solid state. Mechanical compaction means (like rollers) might be used together with the heat treatment to help structure to settle well in a cable.

In an embodiment the composite water barrier may further comprise a sheath 140. The sheath 140 may be longitudinally welded.

The following example demonstrate a reduction of water permeation by a factor of 4.5 in glass fibre (having an average length of more than 1 mm) reinforced polyethylene formed using Celstran CFR-TP HDPE GF70-01 tape compared against Dow DHDA 7708BK, a typical jacket LLDPE polyethylene material with carbon black, see Table 1. Water vapour permeability was measured according to M731023, ASTM F1249, ISO 15106-2 using a Mocon Permatran-W 3-34 apparatus operating at 40 °C and 100 % relative humidity. This result shows a significant decrease of permeability in the multi-phase material with a medium volume fraction of the impermeable phase. Therefore, higher volume fractions of impermeable phases and a combination with other materials named here will give a success in attaining the required water barrier properties.

**Table 1. Water vapour permeability results (the average of two measurements is given)**

| Parameter | Material | |
|---|---|---|
| | 0/90/0/90 composite laminate of PE and 46 vol.% glass fibre | Semi-conductive LLDPE polyethylene with carbon black |
| Water vapour permeability [g·µm/(m²·d)] | 72 | 330 |

An advantage of the inventive water barrier solution is the absence of environmental restrictions as well as good properties for dynamic and deep-water applications, i.e. a relatively low weight and much better fatigue resistance. The solution might also be cost-competitive as compared to lead sheath.

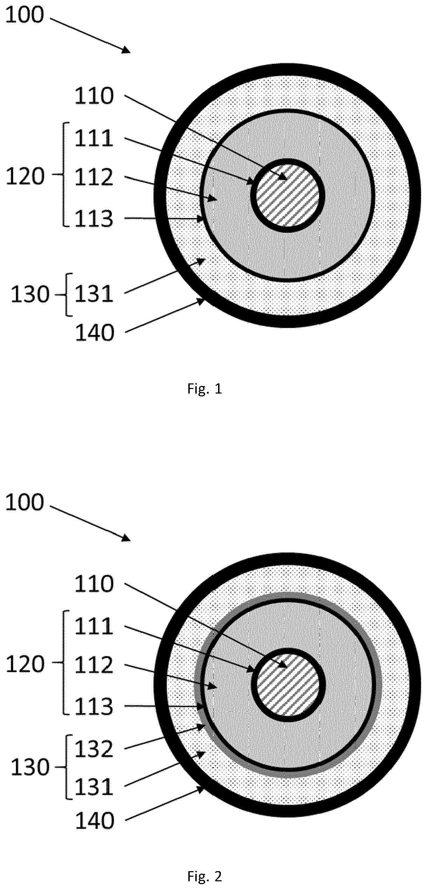

Fig. 1 illustrates a cross section of a first embodiment of the cable.

The power cable 100 comprises an electric conductor 110, an insulation system 120 surrounding the electric conductor 110, and a water barrier 130 according to any of the previous claims, surrounding the insulation system 120; wherein the insulation system 120 comprises an inner semiconducting layer 121, an insulating layer 122 and an outer semiconducting layer 123. The water barrier 130 is a composite layer 131 as described above. In detail, the composite layer 131 comprises
- a first component, wherein the first component is a polymer; and
- at least a second component,
wherein the at least a second component is either impermeable for water molecules or hydrophilic,
wherein the second component is selected from fibres having an aspect ratio of 10 or higher and an average length of 1 mm or less, plate-like particles having an aspect ratio of 10 or higher, fibres having an average length of more than 1 mm, fabrics or any combination thereof; and
wherein the second component is dispersed into the first component.

The power cable 100 further comprises an optional sheath 140.

Fig. 2 is a cross section of a second embodiment of the cable.

The power cable 100 comprises an electric conductor 110, an insulation system 120 surrounding the electric conductor 110, and a water barrier 130 according to any of the previous claims, surrounding the insulation system 120; wherein the insulation system 120 comprises an inner semiconducting layer 121, an insulating layer 122 and an outer semiconducting layer 123. The water barrier 130 is a composite layer 131 and an additional layer 132 as described above. The electric conductor 110 and the insulation system 120 surrounding the electric conductor 110 is herein referred to as the cable core.

In detail, the composite layer 131 comprises
- a first component, wherein the first component is a polymer; and
- at least a second component,
wherein the at least a second component is either impermeable for water molecules or hydrophilic
wherein the second component is selected from fibres having an aspect ratio of 10 or higher and an average length of 1 mm or less, plate-like particles having an aspect ratio of 10 or higher, fibres having an average length of more than 1 mm, fabrics or any combination thereof; and
wherein the second component is dispersed into the first component.

The additional layer 132, may be a metallic layer or a metal-polymer composite, wherein metal-polymer composite comprises:
- a metal foil having an inner and an outer surface area. The inner surface area is oriented towards the cable core.
- a first layer of a thermoplastic semiconducting polymer laid onto the inner surface area of the metal foil, and/or a second layer of a thermoplastic semiconducting polymer laid onto the outer surface area of the metal foil.

The additional layer 132, may further comprise an adhesive layer laid onto the inner and/or on the outer surface area of the metal foil. The adhesive layer may preferably cover from 5 to 95 % of the inner and/or of the outer surface area of the metal foil.

The power cable 100 further comprises an optional sheath 140.

## Claims

1. A water barrier (130) for a power cable, comprising a composite layer (131) comprising
- a first component, wherein the first component is a polymer; and
- at least a second component,
wherein the second component is impermeable to water molecules wherein the second component is selected from fibres having an aspect ratio of 10 or higher and an average length of 1 mm or less, plate-like particles having an aspect ratio of 10 or higher, fibres having an average length of more than 1 mm, fabrics or any combination thereof; and
wherein the second component is dispersed into the first component.

2. A water barrier (130) according to claim 1 wherein the first component is a thermoplastic polymer.

3. A water barrier (130) according to claim 2, wherein the thermoplastic polymer is chosen from:
• Polyethylene (incl. LLDPE, MDPE, HDPE) and copolymers thereof
• Polypropylene and copolymers thereof
• Polyamide (Nylon) and copolymers thereof
• Polyvinyl chloride (PVC)
• Thermoplastic polyurethane (TPU)
• Thermoplastic vulcanizates (TPV, e.g. Santoprene)
• Cast polyurethane (PU).

4. A water barrier (130) according to any of the previous claims, wherein the second component is chosen from fibres having an aspect ratio of 10 or higher and an average length of 1 mm or less, plate-like particles having an aspect ratio of 10 or higher, and the volume fraction of the second component is in the range of 1 to 40% of the water barrier.

5. A water barrier (130) according to any of the previous claims, wherein the second component is selected from:
• nanoclay particles, such as bentonite, kaolinite, hectorite, halloysite;
• graphene and graphene oxide platelets;
• graphene nanotubes;
• multi-wall carbon nanotubes;
• glass fibre having a volume average length of0.1 to 1000 µm;
• carbon fibre having a volume average length of 0.1 to 1000 µm;
• basalt fibre having a volume average length of 0.1 to 1000 µm;
• alumina, titania, zirconia, silica particles and their modifications, including nanoparticles.

6. A water barrier (130) according to any one of claims 1 to 3, wherein the second component is chosen from fibres having an average length of more than 1 mm and/or fabrics and the volume fraction of the second component is comprised between 1 and 90 %.

7. A water barrier (130) according to any one of claims 1 to 3 and 6, wherein the second component is selected from:
• glass fibre;
• carbon fibre;
• basalt fibre; and
• metal fibre.

8. A water barrier (130) according to any of the previous claims, further comprising an additional layer (132), and wherein the additional layer comprises a metallic layer.

9. A water barrier (130) according to claim 8, wherein the additional layer (132) is a longitudinal welded sheet.

10. A water barrier (130) according to claim 8, wherein the additional layer (132) is a metal-polymer composite comprising:
- the metallic layer made of a metal foil having an inner and an outer surface area, the inner surface area is oriented towards the cable core; and
- a first layer of a thermoplastic semiconducting polymer laid onto the inner surface area of the metal foil, and/or a second layer of a thermoplastic semiconducting polymer laid onto the outer surface area of the metal foil.

11. A water barrier (130) according to claim 10, further comprising an adhesive layer laid onto the inner and/or on the outer surface area of the metal foil.

12. A water barrier (130) according to claim 11, wherein the adhesive layer covers from 5 to 95 % of the inner and/or of the outer surface area of the metal foil.

13. A water barrier (130) according to any one of claims 9 to 12, wherein the additional layer is lead free.

14. A water barrier (130) according to any one of claims 9 to 13, wherein the metal foil is either an Al/Al-alloy such as for example an AA1xxx series, an AA5xxx series or an AA6xxx series alloy according to the Aluminium Association Standard, or a Cu/Cu-alloy such as for example pure Cu, a CuNi-alloy or a CuNiSi-alloy, or a Fe/Fe-alloy, such for example stainless alloy SS316 or S32750.

15. A power cable (100) comprising an electric conductor (110), an insulation system (120) surrounding the electric conductor (110), and a water barrier (130) according to any of the previous claims, surrounding the insulation system (120).
